# EUROPEAN PATENT APPLICATION

(11) **EP 4 325 642 A1**
(43) Date of publication of application: **21.02.2024**
(21) Application number: 22882593.1
(22) Date of filing: 26.09.2022
(51) Int. Cl.: H01M 50/244

(54) **CASE, BATTERY AND POWER CONSUMING DEVICE**

(30) Priority: 20.10.2021 CN 202122523135 U
(71) Applicant: Contemporary Amperex Technology Co., Limited, Ningde, Fujian 352100 (CN)
(72) Inventor: PAN, Xin, Ningde, Fujian 352100 (CN); WANG, Qing, Ningde, Fujian 352100 (CN); CHEN, Zhiming, Ningde, Fujian 352100 (CN)
(74) Representative: Ziebig Hengelhaupt Intellectual Property Attorneys Patentanwaltskanzlei PartGmbB
(86) International application number: PCT/CN2022/121436
(87) International publication number: WO 2023/065982

(57) **Abstract**

The present application discloses an enclosure, a battery and a power consuming device. The enclosure is configured to accommodate battery cells and includes: a positioning member, including a bottom wall and a side wall connected to a circumference of the bottom wall, the side wall and the bottom wall enclosing and defining a positioning cavity, and the bottom wall being provided with a hollow portion; a fixing frame, located in the positioning cavity and configured to enclose the battery cells; and a backplate, disposed on one side of the bottom wall facing away from the positioning cavity. According to embodiments of the present application, the fixing frame can be rapidly assembled in the positioning cavity so that the assembly efficiency of the enclosure can be effectively improved. As the bottom wall of the positioning member is provided with the hollow portion, the weight of the positioning member can be reduced and the rapid assembly of parts on the positioning member is facilitated, and moreover, heat of the battery cells can be dissipated through the hollow portion.

## Description

### Cross-Reference to Related Application

The present application claims the priority of Chinese patent application no. 202122523135.4, entitled "ENCLOSURE, BATTERY AND POWER CONSUMING DEVICE" and filed on October 20, 2021, the entire content of which is incorporated herein by reference.

### Technical Field

The present application relates to the field of batteries, and more particularly to an enclosure, a battery and a power consuming device.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

A battery includes a battery enclosure and battery cells located inside the battery enclosure. In the process of assembling the battery, the battery enclosure needs to be assembled first, and then the battery cells are assembled into the battery enclosure. In some cases, the battery enclosure has the problem that the precision in assembly is difficult to control, and thus the assembly efficiency is low.

### Summary of the Invention

In view of the above problems, the present application provides an enclosure, a battery and power consuming device, aiming to improve the precision in assembly and assembly efficiency of the enclosure.

In a first aspect, the present application provides an enclosure for accommodating battery cells. The enclosure includes: a positioning member, including a bottom wall and a side wall connected to a circumference of the bottom wall, the side wall and the bottom wall enclosing and defining a positioning cavity, and the bottom wall being provided with a hollow portion; a fixing frame, located in the positioning cavity and configured to enclose the battery cells; and a backplate, disposed on one side of the bottom wall facing away from the positioning cavity.

In a technical solution of an embodiment of the present application, the enclosure includes the positioning member, the positioning frame and the backplate, the side wall and bottom wall of the positioning frame enclose and define the positioning cavity, and the fixing frame can be rapidly assembled in the positioning cavity, so that the assembly efficiency of the enclosure can be effectively improved. In addition, since the fixing frame restricts the battery cells in the positioning cavity, the distance between the fixing frame and the battery cells can be reduced, improving a position-limiting effect of the fixing frame on the battery cells. In addition, as the bottom wall of the positioning member is provided with the hollow portion, the weight of the positioning member can be reduced and the rapid assembly of parts on the positioning member can be facilitated, and moreover, heat of the battery cells can be dissipated through the hollow portion.

In some embodiments, the enclosure further includes: a reinforcing beam, disposed on one side of the side wall facing away from the positioning cavity, the reinforcing beam being in the shape of a ring surrounding the positioning cavity. The structural strength of the enclosure can be improved by providing the reinforcing beam.

In some embodiments, the enclosure further includes: a heat sink, arranged between the backplate and the bottom wall, at least part of the heat sink being exposed from the hollow portion. The heat sink is capable of dissipating heat of the battery cells in the enclosure via the hollow portion.

In some embodiments, the bottom wall is recessed toward the positioning cavity to form a positioning recess, at least part of the heat sink being restricted to the positioning recess. With the positioning recess disposed on the bottom wall of the positioning member, the assembly efficiency between the heat sink and the positioning member can be improved.

In some embodiments, the heat sink includes a body portion and a heat-dissipation channel, the heat-dissipation channel is raised from the body portion, and at least part of the heat-dissipation channel is restricted to the positioning recess. At least part of the heat-dissipation channel is disposed in the positioning recess, for example, the heat-dissipation channel at the edge of the heat sink is disposed in the positioning recess, so that the overall flatness can be ensured, and the raised heat-dissipation channel and the recessed positioning recess match each other to achieve a good positioning effect.

In some embodiments, the bottom wall is recessed toward the positioning cavity to form a sealant groove, the sealant groove is located in the positioning recess, and a sealant is provided in the sealant groove, such that the heat sink is bonded to the bottom wall by the sealant. The heat sink is bonded to the bottom wall by the sealant in the sealant groove, so that sealing performance between the heat sink and the positioning member can be improved, thus improving leak-tightness of the whole enclosure.

In some embodiments, the enclosure further includes: a first connecting member, wherein the heat sink and the reinforcing beam are connected to each other by the first connecting member, and the first connecting member is located on an outer side of the sealant groove facing away from the positioning cavity. This keeps the first connecting member from interfering with the sealant in position, so that the first connecting member does not affect performance of the sealant. In addition, the first connecting member assists in a connection between the heat sink and the reinforcing beam, which can reduce stress on the sealant, thus improving sealing performance.

In some embodiments, the fixing frame includes a ring-shaped side beam and a positioning beam located inside the side beam, the side beam is connected to the side wall, and two ends of the positioning beam are connected to the side beam, such that the positioning cavity is divided into a plurality of spaces for accommodating the battery cells; and the heat sink is further connected to the positioning beam by a second connecting member, and the second connecting member is located on the hollow portion. The heat sink and the positioning beam are connected to each other, so that the stability of the relative position between the heat sink and the fixing frame and the positioning member can be improved, and the distance between the heat sink and the battery cells inside the enclosure can also be reduced to improve heat dissipation performance. The second connecting member passes through the hollow portion, accordingly, there is no need to provide more connecting holes on the bottom wall and the structural strength of the bottom wall can be improved.

In some embodiments, the enclosure further includes: a third connecting member, wherein the backplate is connected to the reinforcing beam by the third connecting member, and the heat sink is provided with a clearance slot, such that the third connecting member passes through the clearance slot to connect the backplate and the reinforcing beam disposed outside. Since the heat sink is provided with the clearance slot and the clearance slot allows the third connecting member to pass through, the backplate and the reinforcing beam are connected to each other by the third connecting member, the heat sink is kept from applying a force to the third connecting member, so that stress on the third connecting member can be reduced, and the stability of the relative position between the backplate and the reinforcing beam can be improved.

In some embodiments, the side wall is provided with a flange at one end facing away from the bottom wall, the flange is shaped in a direction extending away from the positioning cavity, and the reinforcing beam is located on one side of the flange facing toward the bottom wall. The flange and the side wall together restrict the reinforcing beam, so that the assembly efficiency between the reinforcing beam and the positioning member can be improved, and the stability of the relative position between the reinforcing beam and the positioning member can also be improved.

In some embodiments, the bottom wall includes a first section and a second section, the first section is configured to carry electrical components, the second section is configured to accommodate the battery cells, and the hollow portion is disposed in the second section. The second section of the bottom wall, which is configured to carry the battery cells, is provided with the hollow portion, so that the bottom wall does not affect heat dissipation of the battery cells. The first section of the bottom wall, which is configured to carry other electrical components, is not provided with the hollow portion, so that the carrying performance of the first section can be improved.

In some embodiments, the bottom wall and the side wall are integrally formed, and the side wall is in the shape of a closed ring surrounding the positioning cavity. The positioning member is formed in one piece, so that there is no gap between the bottom wall and the side wall and leak-tightness of the enclosure can be improved. The side wall being in the shape of a closed ring can further improve the leak-tightness of the enclosure.

In a second aspect, the present application provides a battery, including an enclosure in the foregoing embodiments; and battery cells located inside the enclosure.

In a third aspect, the present application provides a power consuming device, including a battery in the foregoing embodiments, the battery being configured to provide electrical energy.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the drawings:
FIG. 1 is a schematic diagram of a vehicle according to an embodiment of the present application;
FIG. 2 is a schematic diagram of a battery pack according to an embodiment of the present application;
FIG. 3 is a schematic diagram of a battery module according to an embodiment of the present application;
FIG. 4 is a schematic exploded diagram of a battery cell according to an embodiment of the present application;
FIG. 5 is a schematic diagram of an enclosure according to some embodiments of the present application;
FIG. 6 is a schematic exploded structural diagram of an enclosure according to some embodiments of the present application;
FIG. 7 is a schematic diagram of an assembly structure of a positioning member and part of a reinforcing beam of an enclosure according to some embodiments of the present application;
FIG. 8 is a schematic diagram of a positioning member of an enclosure according to some embodiments of the present application;
FIG. 9 is a partial enlarged diagram of part I in FIG. 8;
FIG. 10 is a partial sectional view taken along A-A in FIG. 5; and
FIG. 11 is an assembly diagram of a positioning member and a heat sink of an enclosure according to some embodiments of the present application.

### Reference Signs in Detailed Description of Embodiments:

Vehicle 1000; Battery 100, Controller 200, Motor 300;
Enclosure 10, First portion 11, Second portion 12;
Battery cell 20, End cover 21, Housing 22, Cell assembly 23;
Battery module 30;
Positioning member 1, Bottom wall 101, Hollow portion 101a, Positioning recess 101b, Sealant groove 101c, First section 101d, Second section 101e, Side wall 102, Positioning cavity 103; Flange 104;
Fixing frame 2, Side beam 201, Positioning beam 202;
Heat sink 3, Body portion 301, Heat-dissipation channel 302, Clearance slot 303;
Backplate 4;
Reinforcing beam 5;
First connecting member 6;
Second connecting member 7.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "install", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, the market demand for the traction batteries is also expanding.

The applicant notes that as the amount of batteries gradually increases, the production efficiency and structural reliability of the batteries are increasingly important. A battery includes an enclosure and battery cells located inside the enclosure, and the enclosure is usually formed by a plurality of beams welded to the circumference of the battery cells. In one aspect, the need to arrange different beams in corresponding positions for connection leads to an extremely low assembly efficiency of the enclosure. In another aspect, in the process of assembling a plurality of beams to form the enclosure, relying on experience to connect the plurality of beams to one another leads to unstable relative positions of the plurality of beams, which seriously affects the reliability of the enclosure.

To alleviate the above problem, the applicant has found that a positioning member may be provided, and then the plurality of beams may be connected within the positioning member to form a fixing frame for restricting the battery cells. The positioning member can restrict the fixing frame, thereby effectively improving the assembly efficiency of the enclosure. The positioning member can also ensure the accuracy of the relative position between the plurality of beams of the fixing frame, thereby improving the reliability of the enclosure.

The present application provides a battery enclosure, a battery including such an enclosure and a power consuming device using the battery. Such an enclosure is suitable for any batteries, such as battery modules and packs, or primary and secondary batteries. For example, the secondary batteries include Ni-MH batteries, Ni-Cd batteries, lead acid batteries (or lead accumulators), lithium-ion batteries, sodium-ion batteries, polymer batteries, and the like. Such a battery is applicable to various power consuming devices using a battery, such as mobile phones, portable apparatuses, laptops, battery cars, electric toys, electric tools, electric vehicles, ships and spacecraft. For example, the spacecrafts include airplanes, rockets, space shuttles, space vehicles, etc. The battery is configured to provide electrical energy to the power consuming devices described above.

The embodiments of the present application provide a power consuming device using a battery as a power supply. The power consuming device may be, but is not limited to, a cell phone, a tablet, a laptop, an electric toy, an electric tool, an electric scooter, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

It should be understood that the technical solutions described in the embodiments of the present application are not only applicable to the battery and the power consuming device described above, but also applicable to all batteries each including an enclosure and power consuming devices using batteries. However, for the brevity of description, in the following embodiments, the electric vehicle is used as an example for description.

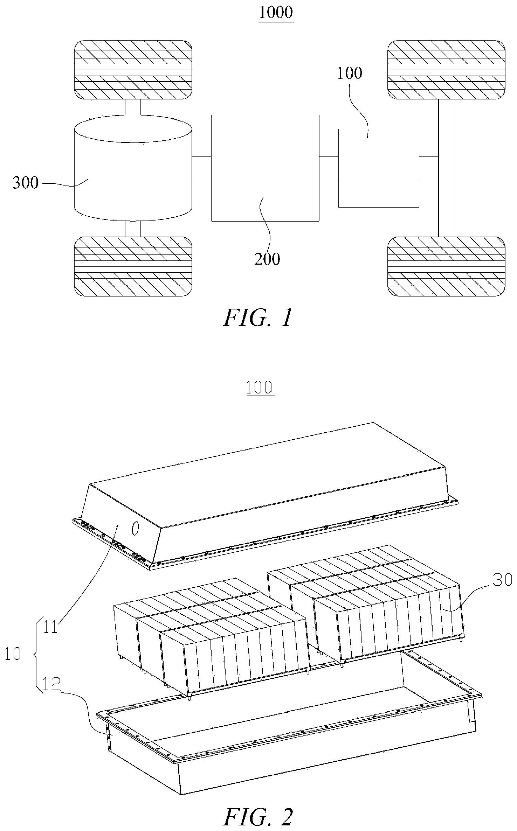

With reference to FIG. 1, FIG. 1 is a schematic diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, an extended-range vehicle, etc. A battery 100 is provided inside the vehicle 1000, and the battery 100 may be provided at the bottom, the front or the back of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but also serve as a power supply for driving the vehicle 1000, instead of or partially instead of fuel or natural gas, to provide driving power for the vehicle 1000.

The battery 100 may include a plurality of battery cells 20 in order to meet different power demands, where the battery cell 20 is the minimum unit of a battery module or a battery pack. The plurality of battery cells 20 can be connected in series and/or in parallel through an electrode terminal for various application scenarios. The battery mentioned in the present application includes a battery module or a battery pack. The plurality of battery cells 20 may be connected in series or in parallel or in a hybrid manner, and the hybrid connection means a mixture of the serial connection and the parallel connection. The battery 100 may also be referred to as a battery pack. In the embodiments of the present application, the plurality of battery cells 20 may directly form a battery pack, or may first form battery modules 30, and the battery modules 30 may then form a battery pack.

FIG. 2 is a schematic diagram of a battery 100 according to an embodiment of the present application. In FIG. 2, the battery 100 may include a plurality of battery modules 30 and an enclosure 10, and the plurality of battery modules 30 are accommodated in the enclosure 10. The enclosure 10 is configured to accommodate battery cells 20 or the battery modules 30, to prevent liquid or other foreign objects from affecting the charging or discharging of the battery cells 20. The enclosure 10 may be a simple three-dimensional structure such as a single cuboid, cylinder or sphere, or a complex three-dimensional structure composed of simple three-dimensional structures such as a cuboid, a cylinder or a sphere, which will not be limited in the embodiments of the present application. The enclosure 10 may be made of an alloy material such as aluminum alloy or ferroalloy, a polymer material such as polycarbonate or polyisocyanurate foam plastic, or a composite material such as glass fibers and epoxy resin, which will also not be limited in the embodiments of the present application.

In some embodiments, the enclosure 10 may include a first portion 11 and a second portion 12. The first portion 11 and the second portion 12 are fitted to each other in a covered manner. The first portion 11 and the second portion 12 together define a space for accommodating the battery cells 20. The second portion 12 may be of a hollow structure with one end open, the first portion 11 may be of a plate-like structure, and the first portion 11 is fitted to the open side of the second portion 12 in a covered manner such that the first portion 11 and the second portion 12 together define a space for accommodating the battery cells 20; and the first portion 11 and the second portion 12 may also be of a hollow structure with one side open, and an open side of the first portion 11 covers the open side of the second portion 12.

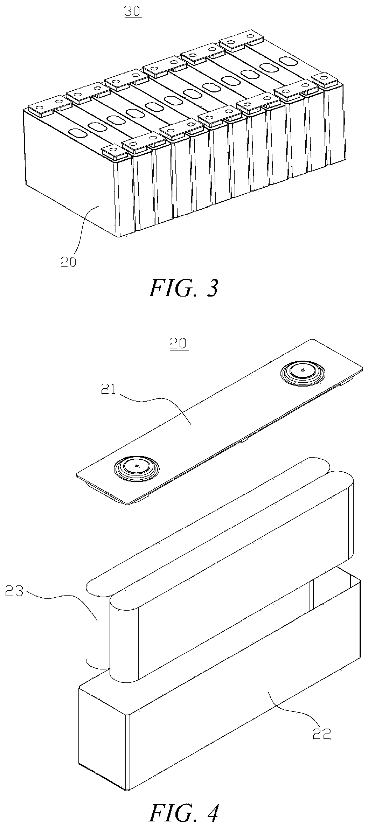

FIG. 3 is a schematic diagram of a battery module 30 according to an embodiment of the present application. In FIG. 3, the battery module 30 may include a plurality of battery cells 20. The plurality of battery cells 20 may be first connected in series or in parallel or in a hybrid connection to form a battery module 30, and the plurality of battery modules 30 may be then connected in series or in parallel or in a hybrid connection to form a battery 100. In the present application, the battery cell 20 may include a lithium ion battery cell, a sodium ion battery cell, a magnesium ion battery cell, etc., which will not be limited in the embodiments of the present application. The battery cell 20 may be in a cylindrical shape, a flat shape, a cuboid shape or another shape, which is also not limited in the embodiments of the present application. The battery cells 20 are generally classified into three types depending on the way of package: cylindrical battery cells 20, prismatic battery cells 20 and pouch battery cells 20, which will also not be limited in the embodiments of the present application. However, for the sake of brevity, the following embodiments will be described by taking the prismatic battery cells 20 as an example.

FIG. 4 is a schematic exploded structural diagram of a battery cell 20 according to some embodiments of the present application. The battery cell 20 refers to the minimum unit of the battery. As shown in FIG. 4, the battery cell 20 includes an end cover 21, a housing 22, and a cell assembly 23.

The end cover 21 refers to a component that covers an opening of the housing 22 to isolate internal environment of the battery cell 20 from external environment. Without limitation, the end cover 21 may be shaped to adapt to the shape of the housing 22 so as to fit with the housing 22. Optionally, the end cover 21 may be made of a material (e.g., an aluminum alloy) with certain hardness and strength, and thus the end cover 21 would not easily deform when subjected to squeezing or collision, so that the battery cell 20 can have a higher structural strength, and the safety performance can also be improved. Functional components, such as electrode terminals, may be provided on the end cover 21. The electrode terminals may be used for electrical connection to a cell assembly 23 for outputting or inputting electrical energy of the battery cell 20. In some embodiments, a pressure relief mechanism, which is configured to release an internal pressure when the internal pressure or temperature of the battery cell 20 reaches a threshold, may be further provided on the end cover 21. The end cover 21 may also be made of various materials, such as copper, iron, aluminum, stainless steel, an aluminum alloy and plastic, which is not specially limited in the embodiments of the present application. In some embodiments, an insulating member may be further provided on an inner side of the end cover 21. The insulating member may be configured to isolate electrical connection components inside the housing 22 from the end cover 21 in order to reduce the risk of short circuiting. Exemplarily, the insulating member may be made of plastic, rubber, etc.

The housing 22 is an assembly that is configured to fit with the end cover 21 to form the internal environment of the battery cell 20, where the formed internal environment can be used for accommodating the cell assembly 23, an electrolyte (not shown in the figure) and other components. The housing 22 and the end cover 21 may be independent components, and the housing 22 may be provided with an opening, at which the end cover 21 covers the opening to create the internal environment of the battery cell 20. Without limitation, the end cover 21 and the housing 22 may also be integrated. Specifically, the end cover 21 and the housing 22 may firstly form a common connecting surface before other components are placed into the housing, and then the end cover 21 covers the housing 22 when the interior of the housing 22 needs to be packaged. The housing 22 may have various shapes and various sizes, for example, in the form of a cuboid, a cylinder, a hexagonal prism, etc. Specifically, the shape of the housing 22 may be determined according to the specific shape and size of the cell assembly 23. The housing 22 may be made of various materials, such as copper, iron, aluminum, stainless steel, an aluminum alloy, plastic, etc., which is not particularly limited in the embodiments of the present application.

The cell assembly 23 is a component, where an electrochemical reaction occurs, in the battery cell 20. The housing 22 may comprise one or more cell assemblies 23 therein. The cell assembly 23 is mainly formed by winding or stacking a positive electrode plate and a negative electrode plate, and a separator is usually provided between the positive electrode plate and the negative electrode plate. Parts of the positive electrode plate and the negative electrode plate that have an active material constitute a main body of the cell assembly, and parts of the positive electrode plate and the negative electrode plate that have no active material each constitute a tab (not shown in the figure). A positive tab and a negative tab may be both located at one end of the main body portion or respectively at two ends of the main body portion. During the charging and discharging of the battery, a positive active material and a negative active material react with the electrolyte solution, and the tabs are connected to the electrode terminals to form a current loop.

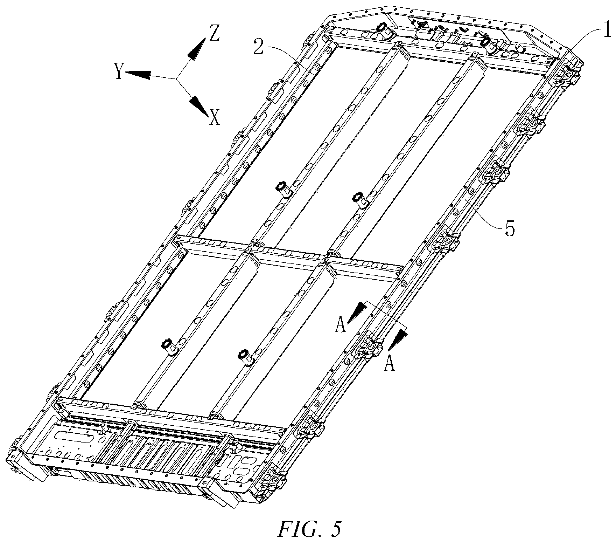

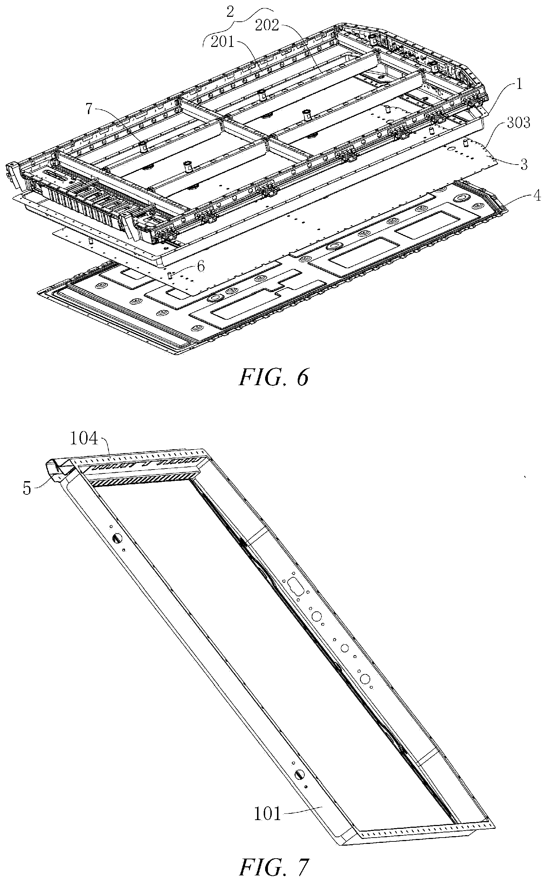

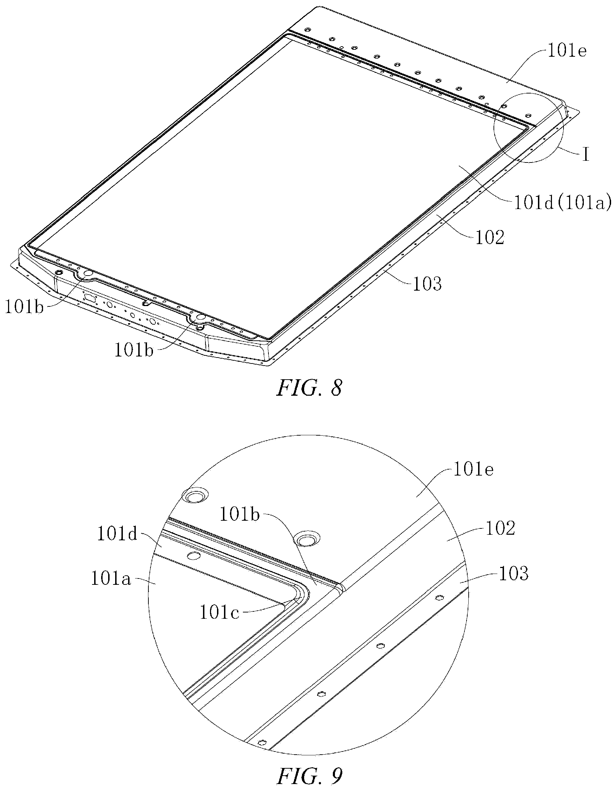

According to some embodiments of the present application, with reference to FIG. 2, and with further reference to FIG. 5 and FIG. 8, FIG. 5 is a schematic diagram of an enclosure 10 according to some embodiments of the present application; FIG. 6 is a schematic exploded structural diagram of an enclosure 10 according to some embodiments of the present application; FIG. 7 is a schematic diagram of an assembly structure of a positioning member and part of a reinforcing beam of an enclosure according to some embodiments of the present application; and FIG. 8 is a schematic diagram of a positioning member of an enclosure according to some embodiments of the present application.

As shown in FIG. 2 to FIG. 8, the enclosure 10 is configured to accommodate the battery cells 20 described above, the enclosure 10 includes a positioning member 1, including a bottom wall 101 and a side wall 102 connected to a circumference of the bottom wall 101, the side wall 102 and the bottom wall 101 enclosing and defining a positioning cavity 103, and the bottom wall 101 being provided with a hollow portion 101a; a fixing frame 2, located in the positioning cavity 103 and configured to enclose the battery cells 20; and a backplate 4, disposed on one side of the bottom wall 101 facing away from the positioning cavity 103.

Optionally, in the enclosure that the enclosure 10 includes a first portion 11 and a second portion 12, the first portion 11 and/or the second portion 12 may include the positioning member 1, the fixing frame 2 and the backplate 4 described above, that is, the positioning member 1, the fixing frame 2 and the backplate 4 may constitute the first portion 11 and/or the second portion 12 described above. The embodiments of the present application are exemplified by one of the first portion 11 or the second portion 12.

As shown in FIG. 4, the direction X in the figures is a height direction of the enclosure 10, the direction Y is a width direction of the enclosure 10, and the direction Z is a length direction of the enclosure 10.

The backplate 4 may be in the shape of a plate. The backplate 4 can cover the whole bottom wall 101. The backplate 4 may be provided with a reinforcing rib that is recessed from the body of the backplate 4. With the reinforcing rib, the structural strength of the backplate 4 can be improved.

The positioning frame being configured to enclose the battery cells 20 means that when the battery cells 20 are disposed in the enclosure 10, the battery cells 20 are located inside the positioning frame.

In a technical solution of an embodiment of the present application, the enclosure 10 includes the positioning member 1, the positioning frame and the backplate 4, the side wall 102 and bottom wall 101 of the positioning frame enclose and define the positioning cavity 103, and the fixing frame 2 can be rapidly assembled in the positioning cavity 103, so that the assembly efficiency of the enclosure 10 can be effectively improved. In addition, since the fixing frame 2 restricts the battery cells 20 in the positioning cavity 103, the distance between the fixing frame 2 and the battery cells 20 can be reduced, improving a position-limiting effect of the fixing frame 2 on the battery cells 20. In addition, as the bottom wall 101 of the positioning member 1 is provided with the hollow portion 101a, the weight of the positioning member 1 can be reduced and the rapid assembly of parts on the positioning member 1 can be facilitated, and moreover, heat of the battery cells 20 can be dissipated through the hollow portion 101a.

According to some embodiments of the present application, optionally, with continued reference to FIG. 7, the enclosure 10 further includes: a reinforcing beam, disposed on one side of the side wall 102 facing away from the positioning cavity 103, the reinforcing beam being in the shape of a ring surrounding the positioning cavity 103. In order to show the position of the reinforcing beam, only the position relationship between part of the reinforcing beam and the positioning member 1 is illustrated in FIG. 7.

The reinforcing beam may be, for example, an I-beam or a hollow beam. When the enclosure 10 is substantially shaped as a quadrangular prism and four side walls 102 are provided, the reinforcing beam includes, for example, four sub-beams. The four sub-beams are located outside the four sidewalls 102, respectively. The four sub-beams are connected to each other to form the ring-shaped reinforcing beam.

The reinforcing beam is provided to improve the structural strength of the enclosure 10. In addition, with the reinforcing beam, a mounting structure may be provided on the reinforcing beam, such that the enclosure 10 can be fixed in a predetermined position by the mounting structure, for example, the enclosure 10 can be fixed inside the vehicle by the mounting structure.

According to some embodiments of the present application, optionally, referring to FIG. 5 and FIG. 6, the enclosure 10 further includes: a heat sink 3 disposed between the backplate 4 and the bottom wall 101, at least part of the heat sink 3 being exposed from the hollow portion.

During the use of the battery, the battery cells 20 may generate heat, and the heat sink 3 is configured to dissipate heat from the battery cells 20 located inside the enclosure 10.

According to some embodiments of the present application, reference is made to FIG. 8 and FIG. 9. FIG. 9 is a partial enlarged view of part I in FIG. 8. Optionally, the bottom wall 101 is recessed toward the positioning cavity 103 to form a positioning recess 101b, and at least part of the heat sink 3 is restricted to the positioning recess 101b.

The positioning recess 101b may be bowl-shaped and includes a ring-shaped protrusion through which a restriction is provided to the heat sink 3. Alternatively, the positioning recess 101b may be channel-shaped, and the positioning recess 101b includes two protrusions disposed opposite each other in a first direction. The two protrusions provide a restriction in the first direction to the heat sink 3. In other embodiments, the positioning recess 101b may also include a protrusion. The protrusion provides a restriction to the heat sink 3. As long as the positioning recess 101b can provide some degree of restriction to the heat sink 3.

The positioning recess 101b is disposed on the bottom wall 101 of the positioning member 1, and the positioning recess 101b can provide a restriction to the heat sink 3, so that during assembling of the heat sink 3, the heat sink 3 can be rapidly assembled in the predetermined position of the positioning member 1, and thus the assembly efficiency between the heat sink 3 and the positioning member 1 can be improved.

There are various ways of arranging the heat sink 3, with reference to FIG. 9, FIG. 9 is a partial sectional view taken along A-A in FIG. 5. The heat sink 3 includes two sub-plates arranged in a laminated manner. A heat-dissipation channel 302 is formed between the two plates. The heat-dissipation channel 302 is configured to store cooling media such as water and coolant.

There are various ways to form the heat-dissipation channel 302 between the two sub-plates. For example, one of the sub-plates is in the shape of a flat plate and the other sub-plate has a plurality of protrusions formed on it. When the two sub-plates abut against each other, the heat-dissipation channel 302 is formed between the protrusions and the other sub-plate.

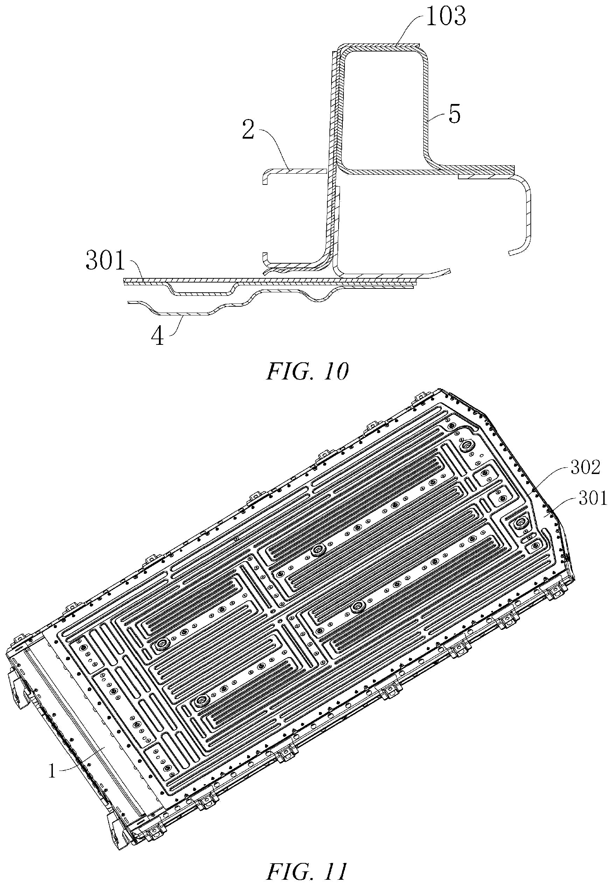

According to some embodiments of the present application, optionally, with reference to FIG. 8 to FIG. 11, FIG. 11 is an assembly diagram of a positioning member 1 and a heat sink 3 of an enclosure 10 according to an embodiment of the present application. The heat sink 3 includes a body portion 301 and a heat-dissipation channel 302, the heat-dissipation channel 302 is raised from the body portion 301, and at least part of the heat-dissipation channel 302 is restricted to the positioning recess 101b.

At least part of the heat-dissipation channel 302 is disposed in the positioning recess 101b, for example, the heat-dissipation channel 302 at the edge of the heat sink 3 is disposed in the positioning recess 101b, so that the overall flatness can be ensured, and the raised heat-dissipation channel 302 and the recessed positioning recess 101b match each other to achieve a good positioning effect.

Optionally, the heat-dissipation channel 302 includes a heat-dissipation inlet and a heat-dissipation outlet, referring to FIG. 8, the positioning recess 101b includes a first positioning recess and a second positioning recess, at least part of the heat-dissipation inlet is located in the first positioning recess and at least part of the heat-dissipation outlet is located in the second positioning recess. The heat-dissipation outlet and heat-dissipation inlet on the heat-dissipation channel 302 have a large size because they are required to be connected to other parts. The provision of the first positioning recess and the second positioning recess facilitates restriction on the heat sink 3 through the heat-dissipation outlet and heat-dissipation inlet of a large size, and can also prevent the heat-dissipation outlet and heat-dissipation inlet of a large size protruding too much to occupy excessive space and affect the energy density of the battery.

According to some embodiments of the present application, optionally, referring to FIG. 8 and FIG. 9, the bottom wall 101 is recessed toward the positioning cavity 103 to form a sealant groove 101c, the sealant groove 101c is located inside the positioning recess 101b, and a sealant is provided in the sealant groove 101c, such that the heat sink 3 is bonded to the bottom wall 101 by the sealant.

The heat sink 3 is bonded to the bottom wall 101 by the sealant in the sealant groove 101c, so that sealing performance between the heat sink 3 and the positioning member 1 can be improved, thus improving leak-tightness of the whole enclosure 10.

The sealant groove 101c is, for example, in the shape of a closed ring, such that the sealant is in the shape of a closed ring, which can improve sealing performance between the heat sink 3 and the positioning member 1.

According to some embodiments of the present application, optionally, referring to FIG. 8 and FIG. 9, the enclosure 10 further includes: a first connecting member 6, wherein the heat sink 3 and the reinforcing beam are connected to each other by the first connecting member 6, and the first connecting member 6 is located on an outer side of the sealant groove 101c facing away from the positioning cavity 103.

The first connecting member 6 being located on an outer side of the sealant groove 101c facing away from the positioning cavity 103 means that: when the heat sink 3 and the positioning member 1 and the reinforcing beam are connected to each other, the first connecting member 6 is located on the side of the sealant groove 101c facing toward the edge of the heat sink 3. The first connecting member 6 may be a threaded screw. The heat sink 3 and the reinforcing beam are provided with connecting holes. The first connecting member 6 passes through the connecting holes on the heat sink 3 and the reinforcing beam to connect the heat sink 3 and the reinforcing beam.

In these optional embodiments, the relative position of the first connecting member 6 and the sealant groove 101c is reasonably set, which keeps the first connecting member 6 from interfering with the sealant in position, so that the first connecting member 6 does not affect performance of the sealant. In addition, the first connecting member 6 assists in a connection between the heat sink 3 and the reinforcing beam, which can reduce stress on the sealant, thus improving sealing performance.

According to some embodiments of the present application, referring to FIG. 6, optionally, the fixing frame 2 includes a ring-shaped side beam 201 and a positioning beam 202 located inside the side beam 201, the side beam 201 is connected to the side wall 102, and two ends of the positioning beam 202 are connected to the side beam 201, such that the positioning cavity 103 is divided into a plurality of spaces for accommodating the battery cells 20; and the heat sink 3 is further connected to the positioning beam 202 by a second connecting member 7, and the second connecting member 7 is located on the hollow portion 101a.

When the battery cells 20 are located in the enclosure 10, the battery cells 20 are located in a space defined by the positioning beam 202 and the side beam 201, or a space defined by plurality of positioning beams 202. The side beam 201 may be welded to the side wall 102. The positioning beam 202 may be welded to the side beam 201. The second connecting member 7 may be a threaded screw. The heat sink 3 and the positioning beam 202 are provided with connecting holes. A second connecting rod passes through the connecting holes on the heat sink 3 and the positioning beam 202 to connect the heat sink 3 with the positioning beam 202.

The heat sink 3 and the positioning beam 202 are connected to each other by the second connecting member 7, and the fixing frame 2 and the positioning member 1 are connected to each other, so that the stability of the relative position between the heat sink 3 and the fixing frame 2 and the positioning member 1 can be improved. In addition, a middle portion of the heat sink 3 and the positioning beam 202 are connected to each other, so that the distance between the middle portion of the heat sink 3 and the battery cells 20 in the enclosure 10 can be reduced, thereby improving heat dissipation performance of the enclosure 10. In addition, the second connecting member 7 passes through the hollow portion 101a to connect the heat sink 3 with the positioning beam 202, accordingly, there is no need to provide more connecting holes on the bottom wall 101 and the structural strength of the bottom wall 101 can be improved.

Optionally, the enclosure 10 includes a carrying area for carrying the battery cells 20. The size of the hollow portion 101a matches the size of the carrying area, such that each battery cell 20 can be in contact connection with the heat sink 3 through the hollow portion, which can further improve the heat dissipation effect of the heat sink 3.

According to some embodiments of the present application, optionally, referring to FIG. 5 and FIG. 6, the enclosure 10 further includes: a third connecting member, wherein the backplate 4 is connected to the reinforcing beam by the third connecting member, and the heat sink 3 is provided with a clearance slot 303, such that the third connecting member passes through the clearance slot 303 to connect the backplate 4 and the reinforcing beam

The clearance slot 303 communicates with the edge of heat sink 3, and the third connecting member is kept from exerting an external force on heat sink 3. Since the clearance slot 303 allows the third connecting member to pass through, the backplate 4 and the reinforcing beam are connected to each other by the third connecting member, the heat sink 3 is kept from applying a force to the third connecting member, so that stress on the third connecting member can be reduced, and the stability of the relative position between the backplate 4 and the reinforcing beam can be improved. The third connecting member is, for example, a threaded screw, the backplate 4 and the reinforcing beam are provided with connecting holes, and the third connecting member passes through the connecting holes on the backplate 4 and the reinforcing beam to connect the backplate 4 and the reinforcing beam.

According to some embodiments of the present application, optionally, referring to FIG. 4 to FIG. 7, the side wall 102 is provided with a flange 104 at one end facing away from the bottom wall 101, the flange 104 is shaped in a direction extending away from the positioning cavity 103, and the reinforcing beam is located on one side of the flange 104 facing toward the bottom wall 101. The flange 104 and the side wall 102 together restrict the reinforcing beam, so that the assembly efficiency between the reinforcing beam and the positioning member 1 can be improved, and the stability of the relative position between the reinforcing beam and the positioning member 1 can also be improved.

Optionally, the enclosure 10 further includes a sealing strip (not shown in the figures), which is disposed on one side of the flange 104 facing away from the reinforcing beam. The provision of the sealing strip can improve sealing performance between the first portion 11 and the second portion 12.

According to some embodiments of the present application, optionally, referring to FIG. 4 to FIG. 7, the bottom wall 101 includes a first section 101d and a second section 101e, the first section 101d is configured to carry electrical components, the second section 101e is configured to accommodate the battery cells 20, and the hollow portion 101a is disposed in the second section 101e. The second section 101e of the bottom wall 101, which is configured to carry the battery cells 20, is provided with the hollow portion 101a, so that the bottom wall 101 does not affect heat dissipation of the battery cells 20. The first section 101d of the bottom wall 101, which is configured to carry other electrical components, is not provided with the hollow portion 101a, so that carrying performance of the first section 101d can be improved.

The electrical components include, for example, a battery management unit (BMU), a battery management system (BMS), a control chip, etc. Optionally, the fixing frame 2 also restricts these electrical components. Optionally, the first section 101d and the second portion 12 are sequentially distributed along the length direction of the enclosure 10, allowing the electrical components to be centrally located on one side of the enclosure 10.

According to some embodiments of the present application, optionally, referring to FIG. 4 to FIG. 7, the bottom wall 101 and the side wall 102 are integrally formed, and the side wall 102 is in the shape of a closed ring surrounding the positioning cavity 103. The positioning member 1 is formed in one piece, such that there is no gap between the bottom wall 101 and the side wall 102, thus improving leak-tightness of the enclosure 10. The side wall 102 being in the shape of a closed ring can further improve the leak-tightness of the enclosure 10. For example, when the enclosure 10 is shaped as a quadrangular prism, the enclosure 10 includes four side walls 102 that are connected end to end in a ring shape, and there is no gap at the corner between every two adjacent side walls 102, allowing for an effective improvement of the leak-tightness of the enclosure 10.

According to some embodiments of the present application, the present application further provides a battery, including an enclosure 10 according to any one of the foregoing embodiments, and battery cells 20 located inside the enclosure 10.

According to some embodiments of the present application, the present application further provides a power consuming device, which includes a battery according to any one of the foregoing embodiments, the battery being configured to provide electrical energy for the power consuming device. The power consuming device may be any one of the above devices or systems using a battery.

According to some embodiments of the present application, referring to FIG. 2 to FIG. 11, the present application provides an enclosure 10, the enclosure 10 including a first portion 11 and a second portion 12. At least one of the first portion 11 and the second portion 12 includes: a positioning member 1, including a bottom wall 101 and side walls 102 connected to a circumference of the bottom wall 101, the side walls 102 and the bottom wall 101 enclosing and defining a positioning cavity 103, and the bottom wall 101 being provided with a hollow portion 101a; wherein the side walls 102 and the bottom wall 101 are integrally formed, the four side walls 102 are connected end to end to form a closed ring, and each of the side walls 102 is provided with a flange 104 on the side facing away from the bottom wall 101; a fixing frame 2, disposed in the positioning cavity 103, wherein the fixing frame 2 includes a side beam 201 and a positioning beam 202, the side beam 201 is welded to an inner surface of the side wall 102 facing toward the positioning cavity 103, and two ends of the positioning beam 202 are welded to the side beam 201; and the side beam 201 and the positioning beam 202 enclose and define a position-limiting space for accommodating the battery cells 20, and the position-limiting space communicates with the hollow portion 101a; a water-cooled plate, located on one side of the bottom wall 101 facing away from the positioning cavity 103; wherein the surface of the bottom wall 101 is recessed from the positioning cavity 103 to form a positioning recess 101b, the water-cooled plate has a heat-dissipation channel 302, and at least part of the heat-dissipation channel 302 is restricted in the positioning recess 101b; a backplate 4, located on the side of the water-cooled plate facing away from the bottom wall 101; and a reinforcing beam, welded to the surface of the side wall 102 facing away from the positioning cavity 103.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. An enclosure (10) for accommodating battery cells (20), the enclosure (10) comprising:
a positioning member (1), comprising a bottom wall (101) and a side wall (102) connected to a circumference of the bottom wall (101), the side wall (102) and the bottom wall (101) enclosing and defining a positioning cavity (103), and the bottom wall (101) being provided with a hollow portion (101a);
a fixing frame (2), located in the positioning cavity (103) and configured to enclose the battery cells (20); and
a backplate (4), disposed on one side of the bottom wall (101) facing away from the positioning cavity (103).

2. The enclosure (10) according to claim 1, further comprising: a reinforcing beam (5), disposed on one side of the side wall (102) facing away from the positioning cavity (103), the reinforcing beam (5) being in the shape of a ring surrounding the positioning cavity (103).

3. The enclosure (10) according to claim 2, further comprising: a heat sink (3) arranged between the backplate (4) and the bottom wall (101), at least part of the heat sink (3) being exposed from the hollow portion (101a).

4. The enclosure (10) according to claim 3, wherein the bottom wall (101) is recessed toward the positioning cavity (103) to form a positioning recess (101b), at least part of the heat sink (3) being restricted to the positioning recess (101b).

5. The enclosure (10) according to claim 4, wherein the heat sink (3) comprises a body portion (301) and a heat-dissipation channel (302), the heat-dissipation channel (302) is raised from the body portion (301), and at least part of the heat-dissipation channel (302) is restricted to the positioning recess (101b).

6. The enclosure (10) according to claim 4, wherein the bottom wall (101) is recessed toward the positioning cavity (103) to form a sealant groove (101c), the sealant groove (101c) is located inside the positioning recess (101b), and a sealant is provided in the sealant groove (101c), such that the heat sink (3) is bonded to the bottom wall (101) by the sealant.

7. The enclosure (10) according to claim 6, further comprising: a first connecting member (6), wherein the heat sink (3) and the reinforcing beam (5) are connected to each other by the first connecting member (6), and the first connecting member (6) is located on an outer side of the sealant groove (101c) facing away from the positioning cavity (103).

8. The enclosure (10) according to any one of claims 3-7, wherein
the fixing frame (2) comprises a ring-shaped side beam (201) and a positioning beam (202) located inside the side beam (201), the side beam (201) is connected to the side wall (102), and two ends of the positioning beam (202) are connected to the side beam (201), such that the positioning cavity (103) is divided into a plurality of spaces for accommodating the battery cells (20); and
the heat sink (3) is further connected to the positioning beam (202) by a second connecting member (7).

9. The enclosure (10) according to any one of claims 3-7, further comprising: a third connecting member, wherein the backplate (4) is connected to the reinforcing beam (5) by the third connecting member, and the heat sink (3) is provided with a clearance slot (303), such that the third connecting member passes through the clearance slot (303) to connect the backplate (4) and the reinforcing beam (5) disposed outside.

10. The enclosure (10) according to any one of claims 2-7, wherein the side wall (102) is provided with a flange (104) at one end facing away from the bottom wall (101), the flange (104) is shaped in a direction extending away from the positioning cavity (103), and the reinforcing beam (5) is located on one side of the flange (104) facing toward the bottom wall (101).

11. The enclosure (10) according to any one of claims 1-7, wherein the bottom wall (101) comprises a first section (101d) and a second section (101e), the first section (101d) is configured to carry electrical components, the second section (101e) is configured to accommodate the battery cells (20), and the hollow portion (101a) is disposed in the second section (101e).

12. The enclosure (10) according to any one of claims 1-7, wherein the bottom wall (101) and the side wall (102) are integrally formed, and the side wall (102) is in the shape of a closed ring surrounding the positioning cavity (103).

13. A battery, comprising:
an enclosure (10) according to any one of claims 1-12; and
battery cells (20) located inside the enclosure (10).

14. A power consuming device, comprising a battery according to claim 13, the battery being configured to provide electrical energy.
